# FASCICULE DE BREVET EUROPEEN

(11) **EP 3 233 471 B1**
(45) Date de publication et mention de la délivrance du brevet: **25.05.2022**
(21) Numéro de dépôt: 15830795.9
(22) Date de dépôt: 14.12.2015
(51) Int. Cl.: B32B 5/02, B32B 5/26, B32B 7/12, B32B 9/00, B32B 9/04, C04B 14/06

(54) **PRODUITS D'ISOLATION THERMIQUE HAUTES PERFORMANCES**
LEISTUNGSSTARKE WÄRMEDÄMMPRODUKTE
HIGH-PERFORMANCE THERMAL INSULATION PRODUCTS

(30) Priorité: 17.12.2014 FR 1462638
(43) Date de publication de la demande: 25.10.2017
(73) Titulaire: SAINT-GOBAIN ISOVER, 92400 Courbevoie (FR)
(72) Inventeur: GOLETTO, Valérie, 94700 Maisons-Alfort (FR)
(74) Mandataire: Saint-Gobain Recherche
(86) Numéro de dépôt international: PCT/FR2015/053490
(87) Numéro de publication internationale: WO 2016/097567

(56) Documents cités:
- EP-A1- 2 402 150
- WO-A1-2010/046074
- WO-A1-2010/126792
- US-A1- 2002 025 427
- US-A1- 2006 125 158
- US-A1- 2006 199 455

## Description

La présente invention concerne un produit d'isolation thermique haute performance, son procédé de fabrication, ainsi que son utilisation dans le domaine de la construction, par exemple dans le marché du neuf ou de la rénovation pour isoler des parois de bâtiments, ou pour l'isolation de parquets flottants, de plafonds, de terrasses, de murs extérieurs, voire de tuyaux, etc, ce matériau isolant se présentant notamment sous forme de panneaux ou bandes.

Qu'il s'agisse du marché du neuf ou de la rénovation, la demande de produits d'isolation, en particulier thermique, performants, est toujours aussi importante. La demande pour des produits offrant des propriétés d'isolation accrues et respectant des cahiers des charges précis des ouvrages du bâtiment est une demande constante. Il est également avantageux, dans cette recherche de matériaux offrant une meilleure isolation thermique, que lesdits matériaux présentent également, voire améliorent, d'autres propriétés recherchées dans la construction de bâtiments, notamment en matière de résistance mécanique ou de résistance au feu, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses phénoliques ou de polyuréthane. Les performances thermiques des matériaux isolants essentiellement minéraux se traduisent par des valeurs de conductivité thermique λ couramment supérieures à 32-35 mW/m.K, en particulier de l'ordre de 40 mW/m.K, valeurs qui peuvent être plus basses dans le cas des isolants essentiellement organiques, par exemple dans le cas d'isolants cellulaires incorporant un gaz de plus faible conductivité thermique que l'air pour améliorer les performances thermiques. Un inconvénient de ces matériaux toutefois est la difficulté de conserver le gaz au sein de la matrice au cours du temps, le matériau perdant en vieillissant une partie de ces performances thermiques. De surcroit, pour les isolants organiques, la réaction au feu est mauvaise du fait de leur nature.

On peut également avoir recours à des matériaux dans lesquels un vide a été effectué de façon à former par exemple des panneaux sous vide. Ces isolants sont difficiles à utiliser car ils ne peuvent être ni découpés, ni percés, et ils peuvent subir une perte progressive du vide sur des longues durées.

On connait également comme isolants les aérogels, généralement sous forme de granules translucides ou de poudre fine, particulièrement performants en termes d'isolation thermique, mais dont les faibles propriétés mécaniques imposent de les utiliser avec des protections ou un agent de renforcement, ou les aérogels au sein de mats (ou nappes) formés de fibres enchevêtrées (mécaniquement résistantes) pour lesquels il peut être difficile de donner une forme déterminée, des composites ou couches à base d'aérogels étant par exemple décrits dans les documents US2006/199455 ou US2002/025427. Ces aérogels sont difficiles et coûteux à obtenir à l'échelle industrielle, ils nécessitent des conditions de séchages délicates et leur combinaison avec d'autres isolants pour obtenir une tenue mécanique ou une forme adéquate peut être complexe. Il est en outre nécessaire de limiter le taux de composants organiques présents (généralement issus du procédé de synthèse des aérogels et/ou issus des additifs ajoutés lors de la fabrication de ces isolants) dans les produits à base d'aérogels utilisés pour l'isolation thermique de bâtiments en raison des propriétés de résistance au feu habituellement recherchées pour ces applications. Le document EP 2 402 150 A1 décrit un produit isolant, formé d'au moins deux couches isolantes renfermant des aérogels, caractérisé en ce que chacune desdites couches comprend de 45 à 70% en poids d'aérogels et de 20 à 40 % en poids de fibres, et en ce que lesdites couches isolantes sont solidarisées au moyen d'une colle organique, par exemple une colle thermofusible.

Il existe notamment comme isolants à base d'aérogels des matelas (ou mats ou nappes) de fibres (inorganiques et/ou organiques), de plusieurs millimètres d'épaisseur, ayant été imprégnés par des réactifs chimiques servant à la fabrication de l'aérogel, l'aérogel étant synthétisé entre les fibres du matelas, permettant ainsi d'avoir une structure intimement liée. Le matelas est généralement conditionné enroulé sur lui même mais sa manipulation est généralement délicate, ce matelas, très poussiéreux et restant généralement fragile, n'étant pas adéquat à la mise en œuvre dans le bâtiment. Ce matelas étant en outre dense (par exemple de l'ordre de 150 kg/m³), son assemblage avec d'autres couches, en particulier des couches similaires, reste problématique, la solidarisation devant être efficace, réalisable facilement à échelle industrielle, et ne devant pas être préjudiciable aux bonnes propriétés d'isolation du matériau conférées par les aérogels (en particulier ne devant pas entrainer une augmentation des valeurs de conductivité thermique), ou à d'autres propriétés recherchées (telles que la résistance au feu pour les applications bâtiment).

La présente invention a cherché à mettre au point un nouveau produit d'isolation thermique haute performance ne présentant pas les inconvénients précités, en particulier un produit démontrant de très bonnes propriétés d'isolation thermique ainsi qu'une bonne résistance mécanique, facile à réaliser et de manipulation aisée, ce produit présentant également une bonne tenue au vieillissement et au feu.

Ce but a été atteint grâce au produit isolant selon l'invention, ce produit étant formé d'au moins deux couches isolantes (thermiquement), en particulier sous forme de mats, renfermant des aérogels, chacune desdites couches comprenant (ou étant formée) de 25 à 95% (en particulier de 40 à 50%) en poids d'aérogel(s) (de préférence inorganique(s)) et de 5 à 75 % (en particulier de 20 à 40 %) en poids de fibres, de préférence (pour au moins 50% en poids, et avantageusement jusqu'à 100% en poids, d'entre elles) inorganiques (en particulier de fibres de verre ou de roche), lesdites couches isolantes étant solidarisées (les unes aux autres au moyen d'une colle organique aqueuse (initialement, avant séchage de la colle, l'eau étant alors éliminée de la colle), à base de polymère(s) vinylique(s). Le produit isolant selon l'invention présente avantageusement un pouvoir calorifique supérieur (PCS) inférieur à 3 MJ/kg (le PCS étant évalué pour 1 kg de produit comme indiqué ultérieurement) et une résistance à la (rupture en) traction supérieure à 1 kPa.

Selon un mode de réalisation avantageux de l'invention, la colle organique utilisée pour solidariser les couches isolantes du produit selon l'invention présente un PCS (pour 1kg de colle) inférieur à 24 MJ/kg et/ou la contribution de ladite colle au PCS du produit (ou PCS relatif (ou PCSr) de la colle au sein du produit, correspondant au PCS de la colle (pour 1 kg de colle) multiplié par le taux de colle en poids au sein du produit, le produit pouvant comprendre une ou plusieurs couches (continues ou non) de colle, selon notamment le nombre de couches isolantes à lier) est inférieur(e) à la différence entre la valeur maximale du PCS du produit isolant selon l'invention (égale à 3 MJ/kg) et la valeur du PCS de l'ensemble formé par les couches isolantes non encore pourvues de colle, en particulier est inférieur(e) à 0.7 MJ/kg, chaque couche isolante, de même que l'ensemble formé par les couches isolantes non encore pourvues de colle présentant par ailleurs un PCS (pour un kg de la ou desdites couches) inférieur ou égal à environ 2.3 MJ/kg (en particulier strictement inférieur à 2.35 MJ/kg, et de préférence inférieur ou égal à 2.3 MJ/kg).

Selon l'invention, la colle organique utilisée pour solidariser les couches isolantes du produit isolant selon l'invention est une colle (initialement) aqueuse (formée de composant(s) au sein d'un solvant aqueux (ou eau contenant éventuellement des additifs)), cette colle collant avantageusement par évaporation de vapeur d'eau (à température ambiante ou par séchage le cas échéant), ladite colle étant en outre à base de polymère(s) vinylique(s) (dans un solvant aqueux), lesdit(s) polymère(s) assurant le collage.

Le produit isolant thermique selon l'invention est particulièrement avantageux: outre de bonnes performances thermiques, il présente une résistance au feu, une tenue mécanique et une durabilité améliorées, tout en restant le cas échéant de fabrication simple (à partir de mats d'aérogels que l'on empile et que l'on colle, la colle agissant avantageusement par évaporation) et de manipulation améliorée (plus grand confort de pose notamment). De façon avantageuse, il présente une résistance au feu de classe A2 selon la norme EN 13501-1, malgré la présence d'une colle organique, et il présente une conductivité thermique inférieure à 25 mW/m.K, de préférence inférieure à 22 mW/m.K, voire inférieure à 18 mW/m.K, ou inférieure à 15 mW/m.K .

Ce produit d'isolation thermique selon l'invention est ainsi un composite multi-couches/formé d'une structure en couches(s), comprenant au moins deux couches isolantes (thermiquement) à base d'aérogels, liées entre elles par une colle, en particulier par au moins un composé ou agent collant ou de collage ou de liaison, organique.

Par colle organique, on entend une colle (ou une composition à pouvoir collant, ce pouvoir collant étant notamment évalué par la résistance à la traction mesurée sur le produit formé des couches collées entre elles (perpendiculairement au plan des couches selon la norme NF EN 1607)) à base d'au moins un composé organique assurant le collage (ou agent de collage), le taux de composé(s) organique(s), présent(s) (incluant celui ou ceux assurant le collage et le cas échéant d'autre(s) composé(s) organique(s) éventuellement présent(s)) dans la colle, par rapport à l'ensemble des composés présents en sec (ou par rapport à l'extrait sec), étant avantageusement d'au moins 50%, de préférence d'au moins 75%, notamment d'au moins 90% voire 100%, en poids. Avantageusement dans la présente invention, la colle comprend comme agent(s) collant(s) essentiellement (à au moins 50% en poids du taux d'agent(s) collant(s) présent(s), en particulier au moins 75% et avantageusement au moins 90%), et de préférence uniquement, un ou des polymères vinyliques choisis notamment parmi les homopolymères d'acétate de polyvinyle (PVAC) ou les copolymères d'acétate de polyvinyle (avec notamment des maléates, de l'éthylène, ou des acrylates, etc.), ces polymères assurant le collage et étant généralement (initialement) dispersés (en émulsion ou suspension notamment) au sein de la colle dans le milieu (ou médium) aqueux (ou eau) évoqué précédemment, le médium aqueux (eau) étant ensuite généralement éliminé par évaporation lors du séchage (à température ambiante ou plus élevée) du produit, permettant ainsi aux polymères d'assurer le collage recherché. L'extrait sec de la colle (taux restant après l'évaporation du solvant) est généralement compris entre 40 et 60% en poids.

Le pouvoir calorifique supérieur (PCS) d'un produit ou matériau est considéré comme étant l'énergie thermique libérée par la combustion d'un kilogramme dudit produit ou matériau. La mesure du PCS est faite notamment dans la présente invention selon la norme EN 13501, en effectuant la mesure sur chaque type de composant du produit d'isolation, en particulier en effectuant la mesure sur chaque type de couche isolante (PCS_{M}) du produit composite selon l'invention et sur la colle utilisée (PCS_{c}), le PCS du produit d'isolation thermique complet étant obtenu par simple calcul en faisant la somme des PCS des différents composants pondérés par leur taux en masse dans le produit complet (par exemple, pour un produit formé de plusieurs mats d'aérogels identiques de poids total m_{M} collés entre eux par une colle dont le poids dans le produit complet est m_{C} : PCS_{(produit)} = (PCS_{M} x m_{M} + PCSc x m_{c}) / (m_{M} + m_{c}). Le PCS du produit selon l'invention est en particulier inférieur à 3 MJ/kg, permettant ainsi de conserver une classification au feu de classe A2.

Pour la mesure de la résistance en traction (évaluée perpendiculairement au plan des couches isolantes selon la norme NF EN 1607), le test dans la présente invention consiste en particulier à solliciter deux des couches isolantes formant le produit, ces couches ayant été collées par une couche de la colle utilisée, la colle étant appliquée en couche continue et ayant été séchée à température ambiante pendant une durée pouvant aller jusqu'à plusieurs jours jusqu'à l'obtention d'une masse constante. Les deux couches isolantes ayant au préalable été rendues chacune solidaire d'un panneau de bois par collage à l'aide d'une colle appropriée de pouvoir collant supérieure à la colle utilisée pour coller les couches isolantes entre elles, la force de traction est effectuée sur les deux panneaux de bois pour décoller les deux couches.

Les couches isolantes (thermiquement) formant la structure du produit isolant selon l'invention sont avantageusement des couches fibreuses/formées de fibres, en particulier de type mats (ou matelas ou nappes formé(e)s de fibres (en particulier fils et/ou filaments) enchevêtrées), formant une structure poreuse ou « discontinue »), renfermant des aérogels (ou de l'aérogel). Chaque couche fibreuse peut être formée de façon connue, par exemple par dépôt de fibres, issues d'une filière ou un autre dispositif de fibrage (en particulier obtenues par centrifugation puis étirées), sur un tapis et éventuellement jonction des fibres entre elles par accrochage mécanique, notamment par aiguilletage, ou par liaison chimique au moyen d'un liant appliqué sur les fibres. Les aérogels peuvent être intégrés aux fibres de différentes façons, soit par imprégnation des couches fibreuses dans ou à l'aide d'une solution permettant de former les aérogels in situ ou soit par mélange avec des aérogels préformés. De préférence, les couches fibreuses sont imprégnées par (une solution contenant) les réactifs permettant d'obtenir les aérogels, l'extraction du liquide et la gélification étant opérés (en particulier en conditions supercritiques) afin d'obtenir des couches isolantes renfermant des aérogels.

Chaque couche fibreuse peut être formée de différents types de fibres. De préférence, une majorité (au moins 50% en poids, en particulier au moins 75% ou au moins 80% en poids des fibres), voire avantageusement l'ensemble, des fibres de chaque couche, sont des fibres inorganiques/minérales, ces fibres pouvant notamment être choisies parmi les fibres de verre (ou la laine de verre), les fibres de roche (ou la laine de roche), les fibres céramiques, les fibres de basalte, etc, et étant de préférence des fibres de verre. Le cas échéant, il est possible d'avoir une faible proportion (notamment moins de 20% en poids, ou moins de 10% en poids, des fibres) de fibres organiques (telles que des fibres de polyéthylène, de polypropylène, de polyacrylonitrile, de polyamide, d'aramide, de polyester, d'acide polylactique, de polytéréphtalate d'éthylène (PET), etc). De préférence, les fibres formant les couches fibreuses sont des fibres de verre, par exemple de verre E ou de verre C, ou des fibres de roche.

La couche fibreuse peut le cas échéant comprendre également un liant, à un taux généralement inférieur à 7 % en poids de matière sèche par rapport à la couche, ce liant permettant le cas échéant de lier les fibres entre elles, et étant en particulier à base aqueuse, ce liant pouvant le cas échéant comprendre différents composés organiques ou inorganiques (résine(s), additif(s), etc.).

Les couches fibreuses formant les couches isolantes selon l'invention sont avantageusement poreuses et respirantes, c'est-à-dire perméables à la diffusion de vapeur d'eau et d'air. Elles présentent avantageusement (chacune) une masse volumique comprise entre 8 et 90 kg/m³, notamment de l'ordre de 10 à 60 kg/m³. Leur épaisseur, pour chaque couche fibreuse, est en particulier comprise entre 6 et 20 mm, notamment entre 8 et 15 mm.

De préférence selon l'invention, les couches fibreuses formant les couches isolantes du produit sont des mats à base (majoritairement, à au moins 80% en poids des fibres) de fibres de verre E ou C (et comprenant éventuellement, à moins de 20% en poids des fibres, des fibres organiques de type PET), d'environ 10-15 mm d'épaisseur, que l'on a imprégné par les réactifs chimiques servant à la fabrication de l'aérogel pour obtenir des couches isolantes à base d'aérogel(s) selon l'invention.

Les aérogels utilisés pour obtenir les couches isolantes selon l'invention sont avantageusement des aérogels inorganiques, en particulier à base d'oxydes, tels que des aérogels à base de silice, d'aluminium et/ou de titane. De préférence, le produit selon l'invention comprend au moins un aérogel de silice comme aérogel(s), et de préférence comprend essentiellement (pour au moins 50 %, et de préférence pour 100%, en poids des aérogels) ou uniquement des aérogels de silice. Le taux d'aérogels au sein du produit selon l'invention est généralement compris entre 40 et 50% en poids dudit produit.

Les aérogels sont généralement obtenus à partir d'un gel, fabriqué par exemple par hydrolyse en présence d'un solvant puis gélification avec catalyse à partir d'un précurseur puis par évaporation ou extraction du liquide formant le gel (par exemple en conditions supercritiques ou sub-critiques) afin de remplacer ledit liquide par un gaz (en particulier de l'air) sans effondrement de la structure poreuse. Les aérogels ainsi formés sont des matériaux hautement poreux, à pores ouverts, et dont la taille des pores est nanométrique.

De préférence selon l'invention, les aérogels sont fabriqués en imprégnant les couches fibreuses précitées par une solution contenant les réactifs permettant de former lesdits aérogels comme indiqué précédemment. Les couches, ou mats, d'aérogels (renforcé(e)s par des fibres) ainsi réalisés sont par exemple commercialisé(e)s sous la référence Spaceloft^{®} ou Cryogel par la société Aspen Aerogel Inc. Les aérogels peuvent également être fabriqués indépendamment des couches fibreuses et mélangés ensuite auxdites couches pour obtenir les couches isolantes.

Les mats d'aérogels étant généralement disponibles en faibles épaisseurs en raison du processus de production et de la nécessité de séchage supercritique, ils ne permettent pas, pris séparément, d'obtenir une isolation satisfaisante. La présente invention permet en les combinant notamment avec une colle sélectionnée appropriée ne dégradant pas de façon significative les performances thermiques de l'ensemble, d'obtenir l'ensemble des propriétés recherchées, en particulier thermiques et mécaniques.

Les mats d'aérogels utilisés présentent avantageusement un PCS inférieur ou égal à environ 2.3 MJ/kg comme indiqué précédemment, c'est-à-dire que le produit intermédiaire formé des couches d'aérogels non collées présente un PCS inférieur ou égal à environ 2.3 MJ par kilogramme dudit produit intermédiaire/de l'ensemble des couches non collées. Les aérogels sont eux-mêmes avantageusement formulés et fabriqués (par séchage supercritique d'un alcogel hydrophobe) pour avoir intrinsèquement un faible PCS.

Le produit d'isolation thermique composite selon l'invention est formé notamment de l'empilement des couches isolantes précitées. Il comprend au moins deux desdites couches isolantes, avantageusement au moins trois, en particulier quatre ou au moins quatre (notamment lorsque lesdites couches présentent une épaisseur de moins de 10-15 mm), desdites couches isolantes d'aérogels telles que précitées, chaque couche étant sous forme de mat comme précité, chacune des couches isolantes de l'empilement étant avantageusement essentiellement inorganique. Chaque couche isolante contient des aérogels et des fibres comme précité, et peut contenir également d'autres charges inorganiques et/ou un ou des additifs, à des taux par exemple de moins de 10% en poids, notamment lorsqu'une ou plusieurs propriétés et/ou fonctions sont recherchées (présence par exemple d'un opacifiant infra-rouge, de graphite, de silicate de calcium, etc.), et/ou peut comprendre (comme déjà évoqué) un ou des liants et/ou huiles et/ou silicones, etc. Un opacifiant (tel que du noir de carbone, du graphite, ou un oxyde tel que du dioxyde de titane TiO₂, etc) peut également être ajouté aux aérogels, lors de leur fabrication ou sur les particules obtenues.

La colle comprend, outre le ou les agents collants, avantageusement de l'eau (médium aqueux) et peut également comprendre le cas échéant un ou des additifs solubles ou insolubles, à des taux inférieurs à 20% en poids de l'extrait sec, tels que des dispersants, des agents agissant sur la rhéologie, des plastifiants, des charges minérales (telle que des carbonates de calcium), etc. De préférence, la composition de colle comprend au moins un plastifiant intervenant notamment sur la rhéologie de la colle.

La colle choisie permet de coller les mats d'aérogels entre eux quels que soient les aérogels et fibres utilisé(e)s. Elle peut être déposée en continu (par exemple par rouleau), ou avantageusement en ilots par collages ponctuels, notamment par lignes (fils) ou points (gouttes) de colle à la surface de l'une ou ou l'autre des couches fibreuses à coller entre elles.

De façon avantageuse, le produit selon l'invention comprend principalement, voire uniquement, des couches à base essentiellement minérale (à l'exception de la colle telle que définie et le cas échéant de liant(s) et/ou additif(s) et/ou de fibres organiques éventuelles comme déjà évoqué, etc.). Des couches organiques (autres que la colle) peuvent notamment être tolérées si elles renferment des additifs anti-feu ou sont autrement résistantes au feu.

Dans un mode de réalisation avantageux illustré ultérieurement, dans lequel le produit comprend quatre couches isolantes de l'ordre de 10 mm d'épaisseur, les couches isolantes étant rendues solidaires par l'adjonction d'une colle organique à base de polymères vinyliques (dans un médium aqueux) en tant que composant(s) organique(s) collant(s) (ou agent(s) de liaison ou agent(s) collant(s)), le taux d'agent(s) collant(s)/de polymère(s) vinylique(s) (en sec), déposé(s) entre deux couches isolantes, est préférentiellement inférieur ou égal à 120 g/m² (g d'agent(s) collant(s) par m² de surface encollée), avantageusement inférieur ou égal à 80 g/m², de façon que le PCS du produit isolant soit inférieur à 3 MJ/kg, la colle présentant avantageusement un PCS inférieur à 24 MJ/kg, comme déjà indiqué précédemment.

Les couches sont rendues solidaires par des liaisons localisées ou non, notamment par liaisons en divers endroits déterminés du produit (par exemple sur les bords ou à intervalles réguliers sur la longueur du produit) pour de meilleurs propriétés d'isolation et éviter les ponts thermiques, et le cas échéant pour conserver une certaine souplesse du produit.

Le produit isolant selon l'invention est de préférence d'épaisseur limitée, son épaisseur n'excédant pas 100 mm, et étant avantageusement inférieure à 60 mm. L'épaisseur de chaque couche isolante ou fibreuse est généralement inférieure à 15-20 mm environ, en particulier inférieure à 13 mm environ.

Le produit isolant selon l'invention se présente généralement sous forme (semi-) rigide et peut être fixé sur ou autour des surfaces ou produits à isoler par différents moyens (collage, agrafage, fixation par vis, etc.).

L'utilisation de la colle organique telle que précédemment définie dans la structure isolante selon l'invention permet l'obtention du produit avantageux selon l'invention sans être pour autant préjudiciable aux propriétés de résistance au feu ou d'isolation thermique recherchées. Traditionnellement et comme déjà évoqué, les composants organiques sont problématiques en termes de comportement au feu, ce qui les rend indésirables pour certaines applications où une résistance importante au feu (notamment une résistance de classe A2) est recherchée (notamment dans les bâtiments). De façon surprenante, le produit selon l'invention présente une résistance au feu de classe A2, malgré la présence de la colle organique sélectionnée, ce qui permet son utilisation comme isolant de divers bâtiments tels que des bâtiments de grande hauteur. Le produit selon l'invention présente également une résistance à la traction élevée et une grande stabilité mécanique à long terme, comme déjà évoqué.

Les performances thermiques de l'isolant selon l'invention se traduisent en particulier par des valeurs de conductivité thermique λ avantageusement inférieures à 25 mW/m.K, et de préférence inférieures à 22 mW/m.K environ, en particulier inférieures à 18 mW/m.K, la variation de conductivité thermique due à la colle étant au plus inférieure à 1 mW/m.K par rapport à l'empilement non collé, comme illustré ultérieurement. La conductivité thermique λ (en W/m.K) représente la quantité de chaleur passant au travers de l'isolant (d'un mètre d'épaisseur, par m² et lorsque la différence de température entre les deux faces est de 1°K). Les valeurs de conductivité thermique λ (comparées à pression et température identiques, en particulier à pression atmosphérique (1 bar) et température ambiante (entre 10 et 25°C) sont mesurées par la méthode fluxmétrique sur le modèle notamment de la norme IEEE 442-1981 (IEEE guide for soil thermal resistivity measurements, ISBN 0-7381-0794-8).

Le produit composite d'isolation thermique selon l'invention présente un PCS de moins de 3 MJ par kilogramme (de produit composite) et de préférence inférieure à 2.8 MJ par kg. En outre, le PCS de la colle organique est avantageusement inférieur à 24 MJ par kg (de colle) et de préférence inférieur à 23.5 MJ /kg.

Le produit selon l'invention présente un bon compromis en termes de conductivité thermique, de résistance à la traction, et de résistance au feu, et est conforme aux exigences en matière d'hygiène et sécurité, comparé à d'autres assemblages de mats d'aérogels effectués avec d'autres types de colles, telles que de colles inorganiques à base de silicates, ou des colles à base de solvants organiques, ne permettant pas d'obtenir l'ensemble des caractéristiques recherchées comme illustré ultérieurement.

L'invention a également pour objet un procédé d'obtention d'un produit isolant selon l'invention, ledit procédé comprenant au moins une étape de collage d'au moins deux couches isolantes, en particulier sous forme de mats, renfermant des aérogels, chacune desdites couches comprenant de 25 à 95% en poids d'aérogel et de 5 à 75 % en poids de fibres (en particulier inorganiques), ledit collage étant effectué au moyen d'une colle organique, avantageusement aqueuse, à base de polymère(s) vinylique(s). Le produit isolant obtenu présente avantageusement un pouvoir calorifique supérieur inférieur à 3 MJ/kg et une résistance à la traction supérieure à 1 kPa comme indiqué précédemment.

Dans le procédé précédent, les couches formant le produit sont posées les unes sur les autres et solidarisées entre elles de façon à obtenir au final un ensemble ou panneau de moins de 100 mm d'épaisseur qui peut être agrémenté le cas échéant d'un surfaçage, par exemple en voile de verre, notamment pour limiter la poussière et/ou être recouvert sur son ou ses chants par un scotch adhésif, par exemple en aluminium, pour la même raison.

Une fois que les couches d'aérogel(s) ont été revêtues par la colle (ou l'adhésif ou le composant collant) organique, chaque couche est empilée sur une autre, et les bords sont alignés de telle sorte que toutes les couches créent une forme géométrique à bords droits (par exemple, un rectangle).

Comme déjà indiqué précédemment, la colle peut être appliquée de différentes façons (par pulvérisation, application directe, etc.), à un taux notamment compris entre 5 et 120 g, en particulier entre 10 et 80 g, du composant collant (en sec) par m² de couche encollée. Si besoin est, des poids peuvent éventuellement être appliquées sur la surface des couches pour un meilleur contact pendant le collage.

Le produit isolant est ensuite séché (et l'eau dans la colle est éliminée), soit par séchage à température ambiante (en laissant l'eau s'évaporer) soit par chauffage (par exemple par mise à l'étuve entre 30 et 115°C), la température et durée de séchage pouvant varier selon le nombre de couches d'aérogels, la quantité et la teneur en solides de la colle et la géométrie du produit.

Le procédé peut également comprendre une étape de finition et conditionnement, et/ou une étape de découpe. Il est notamment possible de recouper les bords du produit isolant après l'assemblage des couches ou de découper les couches renfermant les aérogels aux dimensions requises. Un matériau de revêtement peut le cas échéant être appliqué en surface afin de protéger le produit ou le renforcer, par exemple un voile, un scotch, un enduit, etc..

La présente invention et ses avantages seront mieux compris à la lecture des exemples qui suivent, uniquement donnés à titre illustratif et qui ne peuvent en aucun cas être considérés comme limitatifs.

Dans chacun de ces exemples, on a formé un produit à partir de quatre mats d'aérogels (couches isolantes) de référence Spaceloft^{®} A2 commercialisés par la société Aspen Aerogel Inc, de 600 X 600 mm² (ou de 200 X 200 mm² pour effectuer les tests de résistance en traction) chacun et de 10 mm d'épaisseur chacun, ces quatre mats étant empilés les uns sur les autres, chaque mat comportant des aérogels de silice et présentant une densité de 200 g/m². Le produit avait une épaisseur de l'ordre de 40 mm.

Dans le premier exemple comparatif (exemple de référence 1) non-conforme à l'invention, le produit isolant était uniquement formé des quatre couches précitées empilées et non collées.

Dans le deuxième exemple comparatif (exemple de référence 2) non conforme à l'invention, chaque mat était collé à l'aide d'une colle organique en solvant organique (CH₂Cl₂) à base de colophane, commercialisée sous la référence Swiftcoll 4035 par la société HB Fuller, cette colle comprenant 32% en poids de composants collants colophane dans la composition de colle.

Dans le troisième exemple comparatif (exemple de référence 3) non conforme à l'invention, chaque mat était collé à l'aide d'une colle aqueuse inorganique à base de silicates de sodium, commercialisée sous la référence Acrobond M25S par la société AS technologie, cette colle comprenant 49% en poids de composants collants acétate de vinyle dans la composition de colle.

Dans le dernier exemple, illustrant cette fois la présente invention, chaque mat était collé à l'aide d'une colle aqueuse organique à base de copolymères d'acétates de vinyle et d'un plastifiant, commercialisée sous la référence Tarbicol DB56E1 par la société Bostik, cette colle comprenant 53% en poids de composants collants acétate de vinyle dans la composition de colle.

Dans les exemples avec collage, la colle a été appliquée en couche continue à l'aide d'un pinceau. Le séchage des panneaux a été effectué sous sorbonne ou en étuve à 110°C pendant une période allant de 1h à plusieurs jours selon la vitesse de séchage de la colle utilisée.

La mesure de conductivité thermique a été effectuée selon le principe de la méthode fluxmétrique à une température de 10°C et à pression atmosphérique, la précision des mesures étant estimée à 5%. Pour la réalisation de ce test, il a été décidé d'utiliser une quantité de colle de 100 g/m² (de couche revêtue).

Pour la mesure de la résistance en traction, le test a consisté à solliciter deux des mats collés par une couche de colle. Les deux matelas ont au préalable été rendus solidaires de deux panneaux de bois sur lesquels a été exercée la force de traction pour décoller les deux matelas. Pour la réalisation de ce test, il a été décidé d'utiliser une quantité de colle de 120 g/m² (colle sèche). La couche de colle a été appliquée en couche continue dans les mêmes conditions que celles décrites pour réaliser les panneaux de 600x600 mm². Pour chaque type de colle, trois échantillons identiques ont été réalisés.

La mesure du pouvoir calorifique supérieur (PCS) sur 50 g d'échantillon et pour une quantité de colle de 75 g/m² a été faite sur l'un des mats de référence spaceloft^{®} A2 puis sur chacune des colles. Un calcul simple a permis de connaître suivant la quantité de colle appliquée le PCS du composite complet, ce PCS devant être inférieur à 3 MJ/kg pour conserver notamment la classification au feu A2.

Exemple de référence 1 :
On a obtenu les résultats suivants :
- conductivité thermique À = 19.8 mW/m.K
- PCS du produit = 2.3 MJ/kg

Exemple de référence 2 :
On a obtenu les résultats suivants :
- variation de conductivité thermique λ_{après collage}- λ_{avant collage} = 1 mW/m.K
- résistance à la traction : 4 kPa
- PCS de la colle= 37.9 MJ/kg
- PCS du produit = 3.3 MJ/kg

Exemple de référence 3 :
On a obtenu les résultats suivants :
- variation de conductivité thermique λ_{après collage}- λ_{avant collage} = 0.8 mW/m.K
- résistance à la traction : 0.6 kPa
- PCS de la colle= 0 MJ/kg (incombustible)
- PCS du produit = 2.3 MJ/kg

Exemple selon l'invention :
On a obtenu les résultats suivants :
- variation de conductivité thermique λ_{après collage}- λ_{avant collage} = 0.8 mW/m.K
- résistance à la traction : au moins 2.3 kPa
- PCS de la colle= 23 MJ/kg
- PCS du produit = 2.9 MJ/kg

Les résultats obtenus montrent que le produit selon l'invention permet d'obtenir le meilleur compromis en termes de conductivité thermique, de résistance à la traction, et de résistance au feu, comparé à d'autres assemblages de mats d'aérogels effectués avec d'autres types de colles ne permettant pas d'obtenir l'ensemble des caractéristiques recherchées.

En effet, pour la conductivité thermique la variation de conductivité thermique est significative à partir d'1 mW/m.K, la colle organique en solvant organique de l'exemple de référence 2 étant préjudiciable aux propriétés d'isolation thermique recherchées. Pour la résistance à la traction, la colle inorganique selon l'exemple de référence 3 présente un collage insuffisant la rendant non appropriée pour l'utilisation dans la plupart des applications bâtiments visées pour le produit isolant recherché, où la résistance à la traction doit être supérieure à 1 kPa. Pour le PCS du composite, la colle organique en solvant organique de l'exemple de référence 2 dégrade la performance au feu du produit obtenu, le PCS du produit obtenu excédant 3 MJ/kg. En outre, la colle de l'exemple selon l'invention s'applique facilement, formant facilement un fil de colle qui ne se casse pas, contrairement à ce qui a été observé avec les deux autres colles.

Le produit est notamment adapté à l'isolation de bâtiments, par exemple à l'isolation de parois intérieures ou extérieures (ledit produit convenant notamment pour l"application sur des faces intérieures de parois extérieures de bâtiments), ou de parquets flottants, de plafonds, de terrasses, etc, mais peut également être utilisé avec avantage pour l'isolation thermique, voire acoustique, de toute autre surface (par exemple des containers, etc.).

## Revendications

1. Produit isolant, formé d'au moins deux couches isolantes renfermant des aérogels, **caractérisé en ce que** chacune desdites couches comprend de 25 à 95% en poids d'aérogel(s) et de 5 à 75 % en poids de fibres, et **en ce que** lesdites couches isolantes sont solidarisées au moyen d'une colle organique aqueuse à base de polymère(s) vinylique(s).

2. Produit isolant selon la revendication 1, **caractérisé en ce que** la colle comprend comme agent(s) collant(s), un ou des polymères vinyliques choisis notamment parmi les homopolymères ou les copolymères d'acétate de polyvinyle, ces polymères assurant le collage et étant initialement dispersés dans un médium aqueux au sein de la colle, l'extrait sec de la colle étant généralement compris entre 40 et 60% en poids, le collage étant avantageusement opéré par évaporation du médium aqueux, le taux de polymère(s) vinylique(s), par rapport au taux d'agent(s) collant(s) présent(s) dans la colle, étant d'au moins 50%, en particulier au moins 75%, avantageusement d'au moins 90%, et préférentiellement de 100% en poids.

3. Produit isolant selon l'une des revendications 1 à 2, **caractérisé en ce que** la colle organique présente un PCS inférieur à 24 MJ/kg et/ou la contribution de ladite colle au PCS du produit est inférieure à la différence entre la valeur maximale du PCS dudit produit isolant et la valeur du PCS de l'ensemble formé par les couches isolantes non pourvues de colle, en particulier est inférieure à 0.7 MJ/kg.

4. Produit isolant selon l'une des revendications 1 à 3, **caractérisé en ce que** les couches isolantes sont des couches fibreuses renfermant des aérogels, lesdites couches fibreuses présentant chacune une masse volumique comprise entre 8 et 90 kg/m³, leur épaisseur étant comprise entre 6 et 20 mm, lesdites couches fibreuses étant des mats à base de fibres de verre E ou C, comprenant éventuellement, à moins de 20% en poids des fibres, des fibres organiques de type polytéréphtalate d'éthylène.

5. Produit isolant selon l'une des revendications 1 à 4, **caractérisé en ce que** chaque couche isolante présente un PCS inférieur ou égal à environ 2.3 MJ/kg.

6. Produit isolant selon l'une des revendications 1 à 5, **caractérisé en ce qu'**il comprend au moins deux, avantageusement au moins trois, en particulier quatre ou au moins quatre, couches isolantes, le taux d'agent(s) collant(s) organique(s) entre deux couches isolantes étant inférieur ou égal à 120 g/m², de préférence inférieur ou égal à 80 g/m².

7. Produit isolant selon l'une des revendications 1 à 6 **caractérisé en ce que** la composition de colle comprend au moins un plastifiant.

8. Procédé d'obtention d'un produit isolant, comprenant au moins une étape de collage d'au moins deux couches isolantes renfermant des aérogels, **caractérisé en ce que** chacune desdites couches comprend de 25 à 95% en poids d'aérogel(s) et de 5 à 75 % en poids de fibres, et **en ce que** ledit collage est effectué au moyen d'une colle organique aqueuse à base de polymère(s) vinylique(s).

## Patentansprüche

1. Dämmprodukt, gebildet aus mindestens zwei Dämmschichten, die Aerogel(e) einschließen, **dadurch gekennzeichnet, dass jede** dieser Schichten zu 25 bis 95 Gew.-% Aerogel(e) und zu 5 bis 75 Gew.-% Fasern umfasst und **dass** die Dämmschichten mittels eines wässrigen organischen Klebstoffs auf Basis von Vinylpolymer(en) fest verbunden sind.

2. Dämmprodukt nach Anspruch 1, **dadurch gekennzeichnet, dass** der Klebstoff als Klebemittel ein oder mehrere Vinylpolymere umfasst, die insbesondere unter den Homopolymeren oder Copolymeren von Polyvinylacetat ausgewählt sind, wobei diese Polymere die Verklebung gewährleisten und anfänglich in einem wässrigen Medium innerhalb des Klebstoffs dispergiert sind, der Trockengehalt des Klebstoffs im Allgemeinen zwischen 40 und 60 Gew.-% liegt, das Kleben vorteilhafterweise durch Verdampfen des wässrigen Mediums erfolgt, der Anteil an Vinylpolymer(en), bezogen auf den Anteil an im Klebstoff vorhandenen Klebemittel(n), mindestens 50 Gew.-%, insbesondere mindestens 75 Gew.-%, vorteilhafterweise mindestens 90 Gew.-% und vorzugsweise 100 Gew.-% beträgt.

3. Dämmprodukt nach einem der Ansprüche 1 bis 2, **dadurch gekennzeichnet, dass** der organische Klebstoff einen Brennwert von weniger als 24 MJ/kg aufweist und/oder der Beitrag des Klebstoffs zum Brennwert des Produkts geringer ist als die Differenz zwischen dem maximalen Brennwert des Dämmprodukts und dem Brennwert der Gesamtheit, die durch die nicht mit Klebstoff versehenen Dämmschichten gebildet wird, insbesondere geringer als 0,7 MJ/kg.

4. Dämmprodukt nach einem der Ansprüche 1 bis 3, **dadurch gekennzeichnet, dass** die Dämmschichten Faserschichten sind, die Aerogele einschließen, wobei die Faserschichten jeweils eine Dichte zwischen 8 und 90 kg/m³ aufweisen, ihre Dicke zwischen 6 und 20 mm liegt, wobei die Faserschichten Matten auf Basis von E- oder C-Glasfasern sind, die eventuell, zu weniger als 20 Gew.-% der Fasern, organische Fasern vom Typ Polyethylenterephthalat enthalten.

5. Dämmprodukt nach einem der Ansprüche 1 bis 4, **dadurch gekennzeichnet, dass** jede Dämmschicht einen Brennwert von weniger als oder gleich etwa 2,3 MJ/kg aufweist.

6. Dämmprodukt nach einem der Ansprüche 1 bis 5, **dadurch gekennzeichnet, dass** es mindestens zwei, vorteilhafterweise mindestens drei, insbesondere vier oder mindestens vier, Dämmschichten umfasst, wobei der Anteil an organischem(n) Klebemittel(n) zwischen zwei Dämmschichten geringer als oder gleich 120 g/m², vorzugsweise geringer als oder gleich 80 g/m², ist.

7. Dämmprodukt nach einem der Ansprüche 1 bis 6, **dadurch gekennzeichnet, dass** die Klebstoffzusammensetzung mindestens einen Weichmacher umfasst.

8. Verfahren zum Erhalten eines Dämmprodukts, umfassend mindestens einen Schritt des Verklebens von mindestens zwei Dämmschichten, die die Aerogel(e) enthalten, **dadurch gekennzeichnet, dass** jede der Schichten zu 25 bis 95 Gew.-% Aerogel(e) und zu 5 bis 75 Gew.-% Fasern enthält und **dass** das Kleben mittels eines wässrigen organischen Klebstoffs auf Basis von Vinylpolymer(en) erfolgt.

## Claims

1. Insulation product, formed from at least two insulating layers containing aerogels, **characterized in that** each of said layers comprising from 25 to 95 wt% of aerogel(s) and from 5 to 75 wt% of fibers, said insulating layers being joined together by means of an aqueous organic adhesive based on vinyl polymer(s).

2. Insulation product as claimed in claim 1, **characterized in that** the adhesive comprises, as adhesive agent(s), one or more vinyl polymers selected in particular from the polyvinyl acetate homopolymers or copolymers, these polymers providing the adhesion and initially being dispersed in an aqueous medium in the adhesive, the dry extract of the adhesive generally being between 40 and 60 wt%, gluing advantageously being effected by evaporation of the aqueous medium, the rate of vinyl polymer(s), relative to the rate of adhesive agent(s) present in the adhesive, being at least 50%, in particular at least 75%, advantageously at least 90%, and preferably 100 wt%.

3. Insulation product as claimed in one of claims 1 to 2, **characterized in that** the organic adhesive has a PCS below 24 MJ/kg and/or the contribution of said adhesive to the PCS of the product is less than the difference between the maximum value of the PCS of said insulation product and the value of the PCS of the assembly formed by the insulating layers not provided with adhesive, and in particular is below 0.7 MJ/kg.

4. Insulation product as claimed in one of claims 1 to 3, **characterized in that** the insulating layers are fibrous layers containing aerogels, said fibrous layers each having a voluminal mass between 8 and 90 kg/m³, their thickness being in between 6 and 20 mm, said fibrous layers being mats based on E or C glass fibers, optionally comprising, to less than 20 wt% of the fibers, organic fibers of the polyethylene terephthalate type.

5. Insulation product as claimed in one of claims 1 to 4, **characterized in that** each insulating layer has a PCS less than or equal to about 2.3 MJ/kg.

6. Insulation product as claimed in one of claims 1 to 5, **characterized in that** it comprises at least two, advantageously at least three, in particular four or at least four, insulating layers, the rate of organic adhesive agent(s) between two insulating layers being less than or equal to 120 g/m², preferably less than or equal to 80 g/m².

7. Insulation product as claimed in one of claims 1 to 6, **characterized in that** the adhesive composition comprises at least one plasticizer.

8. Method for obtaining an insulation product, comprising at least one step of gluing at least two insulating layers containing aerogels, **characterized in that** each of said layers comprising from 25 to 95 wt% of aerogel(s) and from 5 to 75 wt% of fibers, said gluing being carried out by means of an aqueous organic adhesive based on vinyl polymer(s).
